# EUROPÄISCHE PATENTANMELDUNG

(11) **EP 2 520 376 A1**
(43) Veröffentlichungstag der Anmeldung: **07.11.2012**
(21) Anmeldenummer: 11164663.4
(22) Anmeldetag: 03.05.2011
(51) Int. Cl.: B07B 1/28, B07B 1/42, B07B 4/08

(54) **Verfahren und Vorrichtung zur Fraktionierung von Schüttgut**

(71) Anmelder: Bühler AG, 9240 Uzwil (CH)
(72) Erfinder: Moosmann, Jürgen, 8280 Kreuzlingen (CH); Fässler, Bruno, 9050 Appenzell (CH)
(74) Vertreter: Hepp Wenger Ryffel AG

(57) **Zusammenfassung**

Das Verfahren zur Fraktionierung von Schüttgut umfasst den Schritt des Zuführens des Schüttguts auf zumindest ein Sieb in einer Vorrichtung (1) umfassend zumindest ein Gehäuse (10) mit einem Innenraum zur Aufnahme des Siebes. Das Gehäuse (10) weist zumindest einen Einlass (13) zur Zuführung des Schüttguts auf und zumindest einen Auslass zur Abführung von zumindest einer Fraktion des Schüttguts. Das Gehäuse (10) weist ein Dach (15) und einen Boden (16) auf, wobei auf dem Dach und dem Boden zumindest jeweils eine Schwungmasse (17) angeordnet ist. Die Vorrichtung (1) weist zudem zumindest ein mechanisches Kopplungsmittel auf, wobei die Schwungmassen mittels des ausserhalb des Innenraums angeordneten mechanischen Kopplungsmittels (21) miteinander gekoppelt und antreibbar sind. Die Vorrichtung (1) weist ein Antriebsmittel zum antreiben des mechanischen Kopplungsmittel auf. Das Verfahren umfasst zudem den Schritt des Versetzens des Gehäuses (10) in eine schwingende Bewegung mittels Antreiben der Schwungmassen. In einem weiteren Verfahrensschritt erfolgt das Fraktionieren des Schüttguts mittels des Siebes. Anschliessend erfolgt ein Abführen zumindest einer der Fraktionen des Schüttguts durch den Auslass aus dem Gehäuse.

## Beschreibung

Die vorliegende Erfindung betrifft ein Verfahren und eine Vorrichtung zur Fraktionierung von Schüttgut gemäss den Oberbebegriffen der unabhängigen Ansprüche, die Verwendung der Vorrichtung zur Fraktionierung sowie ein Verfahren zum Umrüsten und/oder Aufrüsten einer Vorrichtung zur Fraktionierung.

Aus der EP 0 182 831 B1 ist eine Vorrichtung zum Auslesen von Schwergut, insbesondere von Steinen oder ähnlichem aus Getreide und anderen Schüttgütern bekannt. Diese Vorrichtung weist zwei übereinander liegende, geneigt angeordnete Schwingtische auf, die von der gleichen Luft durchströmt werden. Der obere Schwingtisch weist einen Produkteinlass und einen auf einen mittleren Bereich des unteren Schwingtisches hin gerichteten Abwurf auf, wobei der untere Schwingtisch als Steinauslesetisch, d.h. als Sieb, ausgebildet ist. Beide Schwingtische weisen einen gemeinsamen Antrieb auf. Der obere Schwingtisch ist als Schichttisch ausgebildet, der nur an seinem unteren Ende einen Bereich für einen Durchfall einer Gutschicht aufweist.

Dieser vorbekannte Stand der Technik weist jedoch den Nachteil auf, das einerseits der heute benötigte Durchsatz an Schüttgut, welches in der Vorrichtung fraktioniert werden soll, nicht erreicht wird. Zudem ist die Vorrichtung aufwändig zu betreiben, da diese in eine Schwingungsbewegung versetzt werden muss und auch Luft durch die beiden Schwingtische gefördert werden muss. Dies macht die Vorrichtung weiterhin aufwändig in der Konstruktion, weshalb die Maschine in der Herstellung und auch im Betrieb kostspielig ist.

Es ist daher eine Aufgabe der vorliegenden Erfindung, die Nachteile des Bekannten zu vermeiden, insbesondere also ein Verfahren und eine Vorrichtung bereitzustellen, durch die Schüttgut mit hohem Durchsatz in der Vorrichtung fraktioniert werden kann, die Vorrichtung zudem wartungsarm betreibbar ist und dass die Vorrichtung zu geringen Kosten herstellbar ist und auch im Betrieb kostengünstig ist. Eine weitere Aufgabe der vorliegenden Erfindung ist zudem das Bereitstellen von Mitteln zum Umrüsten und/oder Aufrüsten von bereits bestehenden Vorrichtungen zur Fraktionierung von Schüttgut.

Diese Aufgaben werden durch ein Verfahren und eine Vorrichtung mit den Merkmalen der unabhängigen Ansprüche gelöst.

Das erfindungsgemässe Verfahren zur Fraktionierung von Schüttgut umfasst den Schritt des Zuführens des Schüttguts auf zumindest ein Sieb in einer Vorrichtung zur Fraktionierung. Die Vorrichtung umfasst zumindest ein Gehäuse mit einem Innenraum zur Aufnahme des zumindest einen Siebes. Bei dem Sieb handelt es sich insbesondere um einen Siebstapel. Das Gehäuse weist zumindest einen Einlass zur Zuführung des Schüttguts auf und zumindest einen Auslass zur Abführung von zumindest einer Fraktion des Schüttguts. Das Gehäuse weist bei bestimmungsgemässem Gebrauch ein Dach und einen Boden auf, wobei auf oder in dem Dach und auf oder in dem Boden zumindest jeweils eine Schwungmasse angeordnet ist. Die Vorrichtung weist zudem zumindest ein ausserhalb des Innenraums angeordnetes mechanisches Kopplungsmittel auf, wobei die Schwungmassen mittels des mechanischen Kopplungsmittels miteinander gekoppelt und antreibbar sind. Die Vorrichtung weist ein Antriebsmittel zum Antreiben des mechanischen Kopplungsmittels auf. Das erfindungsgemässe Verfahren umfasst zudem den Schritt des Versetzen des zumindest einen Gehäuses in eine schwingende Bewegung mittels Antrieb der Schwungmassen durch Antreiben des mechanischen Kopplungsmittels. Der Verfahrensschritt des Zuführens des Schüttguts sowie des Versetzens der Vorrichtung in eine schwingende Bewegung kann in beliebiger Reihenfolge ausgeführt werden. In einem weiteren Verfahrensschritt erfolgt das Fraktionieren des Schüttguts mittels des Siebes in zumindest eine erste Fraktion und eine zweite Fraktion. Dieser Verfahrensschritt erfolgt nach dem Durchführen der vorhergehenden Verfahrensschritte. Anschliessend erfolgt ein Abführen zumindest einer der Fraktionen des Schüttguts durch den Auslass aus dem Gehäuse. Unter Schüttgut wird im Sinne der vorliegenden Anmeldung rieselfähiges Gut wie beispielsweise Getreide, Sand oder auch Kunststoff in Partikelform verstanden.

Unter dem Innenraum des Gehäuses zur Aufnahme der Siebe wird im Sinne der vorliegenden Anmeldung die Hüllfläche der Innenseite des Gehäuses verstanden, d.h. beispielsweise der durch die dem Innenraum zugewandten Flächen von Dach, Boden und aussen liegenden Seitenflächen des Gehäuses umschlossene Bereich. Beispielsweise wird ein mechanisches Kopplungsmittel, welches Schwungmassen auf oder im Dach und auf oder im Boden verbindet und gekapselt zwischen den aussen liegenden Seitenflächen des Gehäuses geführt ist als innerhalb des Innenraums liegend im Sinne der vorliegenden Anmeldung angesehen.

Die Formulierung, dass auf oder in dem Dach und auf oder in dem Boden eine Schwungmasse angeordnet ist, bedeutet im Sinne der vorliegenden Anmeldung, dass die jeweilige Schwungmasse nicht innerhalb des Innenraums angeordnet ist. Beispielsweise kann das Dach und / oder der Boden als Hohlraum getrennt vom Innenraum ausgebildet sein, in dem die Schwungmasse angeordnet ist.

Unter der Formulierung, dass eine Schwungmasse auf dem Boden des Gehäuses angeordnet ist, wird im Sinne der vorliegenden Anmeldung verstanden, dass die Schwungmasse auf der Aussenseite des Bodens, d.h. der Unterseite, des Gehäuses angeordnet ist. Die Schwungmasse ist also nicht im Innenraum des Gehäuses angeordnet.

Dieses Verfahren hat den Vorteil, dass es mit der verwendeten Vorrichtung kostengünstig durchführbar ist, da die Vorrichtung unter anderem kostengünstig in der Herstellung ist und andererseits während des Betriebs die Vorrichtung lediglich in eine schwingende Bewegung versetzt werden muss und beispielsweise keine zusätzlichen Luftströme zugeführt werden müssen, was kostspielig ist.

Ein weiterer Vorteil des erfindungsgemässen Verfahrens ist der hohe erzielbare Durchsatz an zu fraktionierendem Schüttgut, da die mechanischen Kopplungsmittel ausserhalb des Innenraums angeordnet sind und somit die Fraktionierung im Innenraum nicht behindern.

Insbesondere vorteilhaft ist die Verwendung von Siebstapeln, wodurch die Grösse der Sieböffnungen in Abhängigkeit von der Position des jeweiligen Siebes im Siebstapel angepasst werden kann zur weiteren Erhöhung des Durchsatzes an zu fraktionierendem Schüttgut durch die Vorrichtung. Dies kann beispielsweise dadurch erzielt werden, dass die zum Dach hin angeordneten Siebe grössere Sieböffnungen aufweisen und diese Siebgrössen zum Boden hin kleiner ausgewählt werden können. Durch diese Ausgestaltung der im Verfahren verwendeten Vorrichtung kann eine gute Fraktionierung erreicht werden bei gleichzeitiger Erhöhung des Durchsatzes.

Im Sinne der vorliegenden Anmeldung weist ein Sieb eine Siebfläche auf, die beispielsweise mit Siebgewebe bespannt sein kann, wobei das Sieb Sieböffnungen aufweist, d.h. Öffnungen in der Siebstruktur, durch die Gut bis zu einer definierten maximalen Grösse fallen kann.

Bevorzugt wird in dem Verfahren ungereinigtes Getreide fraktioniert. Insbesondere enthält die erste Fraktion im Wesentlichen Schrollen und die zweite Fraktion im Wesentlichen das gereinigte Getreide.

Im Sinne der vorliegenden Anmeldung wird unter ungereinigtem Getreide derartiges Getreide verstanden, welches unter anderem das Getreide sowie Schmutz, Sand, Schrollen oder beispielsweise auch Metallteile sowie Mischungen hieraus umfasst. Unter Schrollen wird im Sinne der vorliegenden Anmeldung ein Grobteil des ungereinigten Getreides verstanden, welches kein Getreidekorn ist.

Besonders bevorzugt wird das Schüttgut in zumindest zwei Fraktionen, bevorzugt in drei Fraktionen, besonders bevorzugt in vier Fraktionen und ganz besonders bevorzugt in zumindest fünf Fraktionen fraktioniert.

Dies hat den Vorteil, dass das zu fraktionierende Schüttgut in mehrere Fraktionen aufgeteilt wird und somit gereinigtes Getreide mit weniger Verschmutzungen erhalten wird, da einerseits beispielsweise grössere und auch kleinere Partikel als die Getreidekörner, beispielsweise also Schrollen und Sand, von den Getreidekörnern getrennt werden können.

Ganz besonders bevorzugt wird dem Gehäuse Schüttgut mit einer Förderrate von zumindest 50 t/h, bevorzugt zumindest 75 t/h und besonders bevorzugt von zumindest 100 t/h zugeführt, wobei das Schüttgut fraktioniert wird.

Im Sinne der vorliegenden Anmeldung wird als Förderrate ein gefördertes Gewicht Schüttgut pro Zeiteinheit in die Vorrichtung hinein verstanden, was auch als Durchsatz bezeichnet werden kann. Diese Förderrate wird üblicherweise als Gewicht pro Zeiteinheit angegeben, beispielsweise in t/h oder auch kg/min.

Eine höhere erzielbare Förderrate hat den Vorteil, dass zur Fraktionierung eines mit hoher Förderrate geförderten Schüttguts eine geringere Anzahl an Gehäusen notwendig ist, sodass das Verfahren kostengünstig durchführbar ist.

Alternativ bevorzugt werden in dem Verfahren zwei Gehäuse, bevorzugt drei Gehäuse, und ganz besonders bevorzugt zumindest vier Gehäuse mittels des mechanischen Kopplungsmittels und des Antriebsmittels in eine schwingende Bewegung versetzt werden. Das Antriebsmittel ist beispielsweise ein regelbarer Motors.

Dies hat den Vorteil, dass das Schüttgut auf die verschiedenen Gehäuse aufteilbar ist und damit die Fraktionierung parallel in den Gehäusen stattfinden kann und somit die Förderrate erhöht werden kann. Somit ist eine einfache Skalierbarkeit der Vorrichtung in Abhängigkeit von den Anforderungen der jeweiligen Anwendung möglich.

Alternativ besonders bevorzugt umfasst das mechanische Kopplungsmittel eine rotierbare Kopplungswelle, die mittels Riemen mit den an Dach und Boden des Gehäuses angeordneten Schwungmassen verbunden ist. Insbesondere sind die Riemen in den Endbereichen der Kopplungswelle angebracht. Das Antriebsmittel versetzt die rotierbare Kopplungswelle in Rotation, wodurch mittels der Riemen die Schwungmassen angetrieben werden.

Insbesondere weist die Kopplungswelle zumindest eine Riemenscheibe in den Endbereichen auf zur Aufnahme der Riemen.

Unter einem Endbereich einer Kopplungswelle wird im Sinne der vorliegenden Anmeldung verstanden, dass die Welle parallel zur Achse an den jeweiligen Ende der Welle jeweils einen Bereich aufweist, an dem der Riemen mit der Kopplungswelle verbunden ist. Dieser Bereich hat von den jeweiligen Enden der Kopplungswelle aus gesehen eine Ausdehnung parallel zur Achse der Welle von der doppelten Breite der Riemen.

Dies hat den Vorteil, dass die Kopplungswelle sowie das Antriebsmittel ausserhalb des Innenraums des Gehäuses angebracht sind und somit der gesamte Innenraum des Gehäuses zur Fraktionierung verwendet werden kann, wodurch sich der Durchsatz erhöhen lässt. Zudem ist das als rotierbare Kopplungswelle mit Riemen ausgestaltete mechanische Kopplungsmittel konstruktiv einfach ausgebildet, sodass dieses kostengünstig herstellbar ist.

Alternativ ganz besonders bevorzugt wird das Gehäuse aufgehängt, sodass bei bestimmungsgemässen Gebrauch das Gehäuse in eine im Wesentlichen zur Wirkung der Schwerkraft senkrechte Schwingungsbewegung und/oder Kreisbewegung versetzt wird.

Das Gehäuse kann somit also an einem Gestell der Vorrichtung oder auch beispielsweise an einer Decke eines Gebäudes aufgehängt werden. Als Mittel zum Aufhängen eignen sich beispielsweise Bambusstäbe oder andere flexible Stäbe wie beispielsweise aus Metall, Metalllegierungen, Polyester, GFK und Epoxidharz oder beliebigen Kombinationen daraus. Unter einem flexiblen Stab wird im Sinne der vorliegenden Anmeldung ein Stab verstanden, der im Wesentlichen flexibel bei seitlicher Auslenkung ist, d.h. nicht bei einer Kraftausübung entlang der Längsachse des Stabes. Insbesondere bevorzugt erfolgt ein Siebabstoss beim Fraktionieren in der Ebene einer Siebfläche des Siebes in zumindest zwei voneinander getrennten, sich insbesondere gegenüberliegenden Randabschnitten des Siebes. Insbesondere ist der Siebabstoss die erste Fraktion.

Unter Siebabstoss wird im Sinne der vorliegenden Anmeldung dasjenige Schüttgut verstanden, welches nicht durch die jeweiligen Sieböffnungen des Siebes durchfallen und / oder gefördert werden kann, da es zu grosse Partikelgrössen im Verhältnis zu den Sieböffnungen aufweist.

Zudem wird im Sinne der vorliegenden Anmeldung unter zwei voneinander getrennten Randabschnitten des Siebes verstanden, dass auf dem Umfang des Siebes zwei Bereiche vorhanden sind, durch die der Siebabstoss vom Sieb weggefördert werden kann, wobei diese beiden Bereiche nicht miteinander in Berührung stehen. Beispielsweise kann es sich hierbei bei rechteckigen Sieben um zwei Seiten des Rechtecks handeln, die parallel zueinander liegen.

Als gegenüberliegende Randabschnitte werden solche Randabschnitte verstanden, die beide einen Schnittpunkt mit einer durch den Mittelpunkt der Siebebene gezogenen geraden Linie aufweisen. Beispielsweise ist dies bei einem rechteckigen Sieb für die jeweiligen parallelen Seiten des Rechtecks erfüllt, wenn zumindest jeweils diese beiden Seiten als Randabschnitte fungieren.

Dies hat den Vorteil, dass der Durchsatz erhöht werden kann, da der Siebabstoss in einem grösseren Bereich des Siebes abgeführt werden kann.

Ein weiterer Aspekt der vorliegenden Erfindung ist gerichtet auf eine Vorrichtung zur Fraktionierung von Schüttgut. Diese Vorrichtung wird insbesondere zur Durchführung eines Verfahrens wie oben erläutert verwendet. Die Vorrichtung umfasst zumindest ein Gehäuse mit einem Innenraum zur Aufnahme zumindest einen Siebes. Insbesondere kann in dem Innenraum zumindest ein Siebstapel aufgenommen werden. Diese Vorrichtung wird verwendet zur Fraktionierung des Schüttguts in zumindest eine erste Fraktion und eine zweite Fraktion. Das Gehäuse weist zumindest einen Einlass zur Zuführung des Schüttguts auf das Sieb auf und zumindest einen Auslass zur Abführung von zumindest einer Fraktion des Schüttguts. Das Gehäuse weist bei bestimmungsgemässen Gebrauch ein Dach und einen Boden auf. Auf oder in dem Dach und auf oder in dem Boden ist zumindest jeweils eine Schwungmasse angeordnet. Die Vorrichtung weist zumindest ein ausserhalb des Innenraums angeordnetes mechanisches Kopplungsmittel auf, wobei die Schwungmassen mittels des zumindest einen mechanischen Kopplungsmittels miteinander gekoppelt sind. Zudem sind die Schwungmassen mittels des mechanischen Kopplungsmittels antreibbar. Die Vorrichtung weist zudem ein Antriebsmittel zum Antreiben des zumindest einen mechanischen Kopplungsmittels auf, wobei das zumindest eine Gehäuse dadurch mittels der Schwungmassen in eine schwingende Bewegung versetzbar ist.

Unter einer Schwungmasse wird im Sinne der vorliegenden Anmeldung eine derartig ausgestaltete Masse verstanden, die eine Umwucht aufweist, d.h. deren Masse nicht rotations-symmetrisch verteilt ist, wodurch bei Rotation dieser Schwungmasse das zumindest eine Gehäuse in eine schwingende Bewegung versetzbar ist.

Die erfindungsgemässe Vorrichtung wird insbesondere zur Durchführung des oben beschriebenen Verfahrens verwendet und weist deshalb alle Vorteile des oben beschriebenen Verfahrens auf.

Besonders bevorzugt ist das Gehäuse aufgehängt, beispielsweise an einem Gestell der Vorrichtung oder an einer Decke eines Gebäudes. Insbesondere ist das Gehäuse mittels Stäben aufgehängt, die im Wesentlichen auf der Höhe des Schwerpunkts des Gehäuses an dem Gehäuse befestigt sind.

Dies hat den Vorteil, dass die Installation der Vorrichtung einfach und kostengünstig möglich ist, da beispielsweise im Gegensatz zu einer auf dem Boden aufgestellten Vorrichtung keine Dämpfungsmittel zur Dämpfung der schwingenden Bewegung zusätzlich der zur Aufhängung verwendeten elastisch durchbiegbaren Stäben notwendig sind. Die Stäbe weisen ja bereits selbst entsprechende Dämpfungseigenschaften bei seitlicher Auslenkung bezogen auf die Längsachse auf.

Besonders bevorzugt ist der zumindest eine Einlass im Dach angeordnet und/oder der zumindest eine Auslass im Boden.

Diese Ausgestaltung der Vorrichtung hat den Vorteil, dass insbesondere die Anordnung des Einlasses im Dach und des Auslasses im Boden des Gehäuses zu einer Platz sparenden Bauweise führt, da keine seitlich am Gehäuse angebrachten Einrichtungen zum Einlass beziehungsweise Auslass notwendig sind. Somit sind beispielsweise mehrere Gehäuse in enger Aufstellung anordenbar, wodurch sich eine hohe Fraktionierungsleistung pro Fläche erzielen lässt.

Insbesondere bevorzugt ist das Antriebsmittel ein Motor, der insbesondere regelbar ist.

Dies hat den Vorteil der Regelbarkeit der schwingenden Bewegung durch eine Reglung des Motors.

Ganz besonders bevorzugt ist das zumindest eine mechanische Kopplungsmittels eine rotierbare Kopplungswelle mit an der Kopplungswelle angeordneten Riemen. Insbesondere sind die Riemen in den Endbereichen der Kopplungswelle angeordnet. Jede Schwungmasse ist mit zumindest einem Riemen verbunden. Die rotierbare Kopplungswelle ist mittels des Antriebsmittels in Rotation versetzbar zum Antreiben der Schwungmasse. Diese konstruktive Ausgestaltung der Vorrichtung weist die bereits oben erläuterten Vorteile auf.

Alternativ bevorzugt weist die Vorrichtung zumindest zwei Gehäuse, bevorzugt drei Gehäuse und ganz besonders bevorzugt zumindest vier Gehäuse auf zur parallelen Fraktionierung von Schüttgut.

Dies hat den Vorteil der Skalierbarkeit des Durchsatzes an Schüttgut durch die Vorrichtung in Abhängigkeit von den Anforderungen der jeweiligen Anwendung.

Alternativ besonders bevorzugt weist die Vorrichtung genau eine rotierbare Kopplungswelle auf mit zumindest zwei an der Kopplungswelle angeordneten Riemen. Die Riemen sind mit den auf oder im dem Dach und auf oder in dem Boden jeweils angeordneten Schwungmassen des Gehäuses verbunden. Das Gehäuse und das zumindest zweite Gehäuse sind jeweils mittels weiterer Riemen verbunden zum Antreiben der auf dem Dach und dem Boden jeweils angeordneten Schwungmasse des zweiten Gehäuses.

Mit anderen Worten, die auf oder im Dach und auf oder im Boden angeordneten Schwungmassen des Gehäuses sind mittels Riemen mit der Kopplungswelle verbunden. Die auf oder in dem Dach und auf oder in dem Boden angeordneten Schwungmassen des zweiten Gehäuses sind dabei mittels weiterer Riemen mit den entsprechenden auf oder in dem Dach und auf oder in dem Boden angeordneten Schwungmassen des Gehäuses verbunden. Wenn nun die rotierbare Kopplungswelle in Rotation versetzt wird, so wird diese Rotation mittels der Riemen auf die Schwungmassen des Gehäuses übertragen, sodass diese angetrieben und insbesondere in Rotation versetzt werden. Dadurch werden über die weiteren Riemen die Schwungmassen des zweiten Gehäuses angetrieben werden, d.h. insbesondere in Rotation versetzt werden.

Hierdurch werden insbesondere zumindest das Gehäuse und das zweite Gehäuse in Schwingung versetzt.

Dies hat den Vorteil, dass mit lediglich einem Antrieb und einer entsprechenden Anzahl Riemen die zumindest zwei Gehäuse in eine synchron schwingende Bewegung versetzt werden können. Diese konstruktive Ausgestaltung des Kopplungsmittels ist somit kostengünstig und die Schwingungsbewegung durch Regelung des Antriebsmittels einfach regelbar.

Alternativ ganz besonders bevorzugt sind die zumindest zwei Gehäuse lösbar miteinander verbunden. Insbesondere sind diese klippbar und / oder verschraubbar miteinander verbunden.

Beispielsweise können die zumindest zwei Gehäuse mittels eines Klippmechanismus miteinander lösbar verbunden werden.

Dies hat den Vorteil, dass entsprechend den jeweiligen Anforderungen der Anwendung die benötigte Anzahl Gehäuse verwendet werden kann zur Erzielung eines benötigten Durchsatzes durch die Vorrichtung.

Insbesondere bevorzugt sind die Siebe des Siebstapels einzeln austauschbar und / oder als Einschübe ausgebildet, die in das Gehäuse jeweils eingeschoben werden können wie beispielsweise eine Schublade.

Dies hat den Vorteil, dass bei Beschädigung Siebe einfach austauschbar oder auch reinigbar sind und zudem der Siebstapel flexibel an die benötigte Fraktionierung angepasst werden kann.

Ein weiterer Aspekt der vorliegenden Erfindung ist gerichtet auf eine rotierbare Kopplungswelle für eine Vorrichtung wie oben beschrieben, insbesondere zur Durchführung eines Verfahrens wie oben beschrieben. Die rotierbare Kopplungswelle ist mit einem Antriebsmittel der Vorrichtung verbindbar zum Antreiben der rotierbaren Kopplungswelle. An der rotierbaren Kopplungswelle, insbesondere in deren Endbereichen, ist jeweils ein Verbindungsmittel, insbesondere ein Riemen, montierbar zur Verbindung mit jeweils zumindest einer auf oder in einem Dach und auf oder in einem Boden eines Gehäuses der Vorrichtung angeordneten Schwungmasse. Die Verbindung erfolgt derart, dass das Gehäuse mittels der Schwungmassen in eine schwingende Bewegung versetzbar ist.

Diese rotierbare Kopplungswelle entspricht der oben beschriebenen Kopplungswelle und weist damit alle oben beschriebenen Vorteile auf.

Ein weiterer Aspekt der vorliegenden Erfindung ist gerichtet auf ein System bestehend aus einer Kopplungswelle, zumindest zwei Riemen und insbesondere einem Antriebsmittel zum Antreiben der Kopplungswelle. Das System wird verwendet zur Verbindung mit einer Vorrichtung zur Fraktionierung, um eine Vorrichtung wie oben beschrieben herzustellen. Insbesondere soll ein Verfahren wie oben beschrieben durchgeführt werden. Das System ist mit einem Gehäuse der Vorrichtung verbindbar. Das Gehäuse weist jeweils zumindest eine auf oder in einem Dach und auf oder in einem Boden des Gehäuses angeordnete Schwungmasse auf. Beide Riemen sind jeweils an der Kopplungswelle, insbesondere in deren Endbereichen, montierbar und mit jeweils einer der Schwungmassen verbindbar. Diese Verbindung ist derart ausgestaltet, dass durch Antreiben der Kopplungswelle das Gehäuse mittels der Schwungmassen in eine schwingende Bewegung versetzbar ist.

Dieses System zur Herstellung einer oben beschriebenen Vorrichtung verwendet und insbesondere zur Durchführung des oben beschriebenen Verfahrens und weist deshalb die entsprechenden oben beschriebenen Vorteile auf.

Ein zusätzlicher Aspekt der vorliegenden Erfindung ist gerichtet auf die Verwendung einer Vorrichtung wie oben beschrieben zur Durchführung eines Verfahrens wie oben beschrieben zum fraktionieren von Schüttgut. Insbesondere werden Schüttgüter wie Zement, Kalk, Kunststoffe, Sand, ungemahlenes Getreide, Kleie sowie Futtermittel oder Mischungen daraus fraktioniert.

Hier wird eine Vorrichtung wie oben beschrieben verwendet gemäss dem oben beschriebenen Verfahren. Diese Verwendung weist deshalb alle entsprechenden Vorteile auf.

Ein weiterer Aspekt der vorliegenden Erfindung ist gerichtet auf ein Verfahren zum Umrüsten und/oder Aufrüsten einer Vorrichtung zur Fraktionierung von Schüttgut. In dem Verfahren wird die oben beschriebene rotierbare Kopplungswelle oder das oben beschriebene System mit einem Gehäuse der Vorrichtung verbunden zur Herstellung einer Vorrichtung wie oben beschrieben.

Dieses Verfahren hat den Vorteil, dass bereits bestehende Vorrichtungen zur Fraktionierung, die nicht erfindungsgemäss ausgestaltet sind, mittels dieses Verfahrens umgerüstet und/oder aufgerüstet werden können, wodurch eine Vorrichtung wie oben beschrieben hergestellt werden kann, welche die entsprechenden oben aufgeführten Vorteile aufweist.

Die Erfindung wird nachfolgend anhand von Ausführungsbeispielen zum besseren Verständnis näher erläutert, ohne dass die Erfindung auf die Ausführungsbeispielen zu beschränken ist. Es zeigen:
- Figur 1:: Perspektivische Darstellung einer erfindungsgemässen Vorrichtung zur Fraktionierung von Schüttgut;
- Figur 2:: Seitenansicht der erfindungsgemässen Vorrichtung zur Fraktionierung von Schüttgut gemäss Figur 1;
- Figur 3:: Draufsicht auf ein Dach der erfindungsgemässen Vorrichtung gemäss Figur 1;
- Figur 4:: Vorderansicht auf die erfindungsgemässe Vorrichtung gemäss Figur 1;
- Figur 5:: schematische Darstellung des Dachs der erfindungsgemässen Vorrichtung gemäss Figur 1;
- Figur 6:: schematische Darstellung des Bodens der erfindungsgemässen Vorrichtung gemäss Figur 1;
- Figur 7:: perspektivische Darstellung einer alternativen erfindungsgemässen Vorrichtung mit drei Gehäusen;
- Figur 8:: Vorderansicht der erfindungsgemässen Vorrichtung gemäss Figur 7;
- Figur 9:: Draufsicht auf die erfindungsgemässe Vorrichtung gemäss Figur 7;
- Figur 10:: Seitenansicht der erfindungsgemässen Vorrichtung gemäss Figur 7;
- Figur 11:: schematische Darstellung des Dachs der erfindungsgemässen Vorrichtung gemäss Figur 7;
- Figur 12:: schematische Darstellung des Bodens der erfindungsgemässen Vorrichtung gemäss Figur 7.

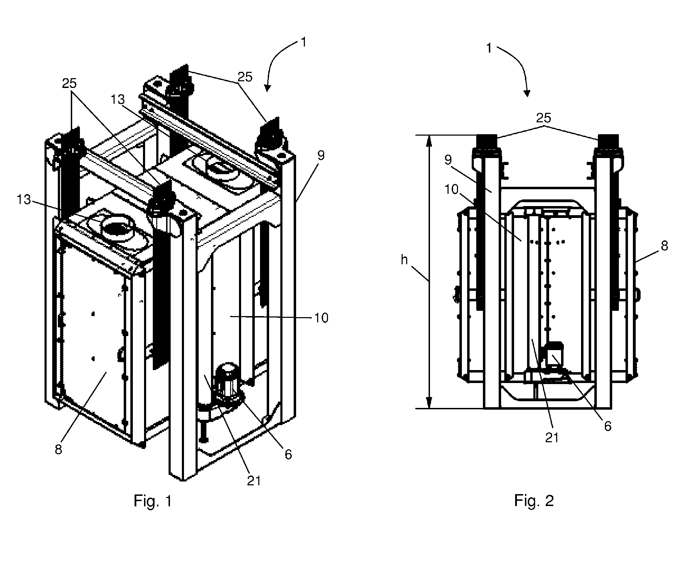

In Figur 1 ist in perspektivischer Darstellung eine Vorrichtung 1 zur Fraktionierung von Schüttgut dargestellt. Die Vorrichtung 1 weist ein Gehäuse 10 auf, welches mittels Stäben 25 an einem Gestell 9 aufgehängt ist.

Das Gehäuse 10 weist eine Tür 8 auf, die geöffnet werden kann, um Zugang zu einem Innenraum des Gehäuses zu erhalten, in dem hier nicht gezeigten Siebe bzw. Siebstapel aufnehmbar sind zur Fraktionierung von Schüttgut. Das Gehäuse 10 weist zwei Einlässe 13 auf, durch die Schüttgut in das Gehäuse 10 gefördert werden kann, welches dann im Gehäuse 10 mittels der nicht gezeigten Siebe bzw. Siebstapel fraktioniert wird. An dem Gehäuse 10 ist ein als Motor 6 ausgebildetes Antriebsmittel angebracht sowie ein als Kopplungswelle 21 ausgebildetes Kopplungsmittel.

Im Betrieb wird nun die Vorrichtung 1 durch Antreiben der Kopplungswelle 21 mittels des Motors 6 in eine schwingende Bewegung versetzt. Dies erfolgt durch Antreiben von hier nicht gezeigten Schwungmassen, die sich im dem Deckel bzw. in dem Boden des Gehäuses 10 befinden und über nicht gezeigte Riemen mit der Kopplungswelle 21 verbunden sind und somit in eine Rotation versetzbar sind. Durch diese Rotation der Schwungmassen in Verbindung mit der Aufhängung des Gehäuses an Stäben 25, welche elastisch biegbar sind, ist nun das Gehäuse 10 in eine schwingende Bewegung versetzbar.

In Figur 2 ist eine Seitenansicht der erfindungsgemässen Vorrichtung gemäss Figur 1 gezeigt parallel zur durch die Tür 8 gemäss Figur 1 definierten Ebene. Gleiche Referenzzeichen bezeichnen gleiche Merkmale von hier ab und im Folgenden in den Figuren und werden deshalb nur bei Bedarf erneut erläutert.

Die Vorrichtung 1 weist ein Gehäuse 10 mit einer Tür 8 auf, wobei das Gehäuse mittels Stäben 25 an einem Gestell 9 aufgehängt ist. An dem Gehäuse 10 sind ein Motor 6 und eine Kopplungswelle 21 angebracht zur Versetzung des Gehäuses 10 in eine schwingende Bewegung.

Die Vorrichtung 1 zur Fraktionierung von Schüttgut weist eine Höhe h von 3.1 m auf.

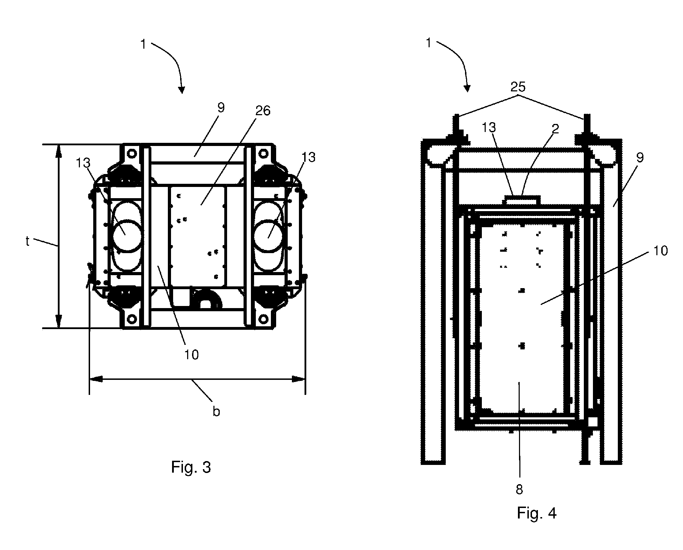

In Figur 3 ist eine Draufsicht auf die Vorrichtung 1 gemäss Figur 1 senkrecht zur durch die Einlassöffnungen 13 gemäss Figur 1 definierten Ebene gezeigt.

Die Vorrichtung weist eine Tiefe t von 1.8 m auf sowie eine Breite b von 2.1 m. Die Vorrichtung 1 weist ein Gehäuse 10 auf mit zwei Einlässen 13 zur Zuführung von Schüttgut. Das Gehäuse 10 ist mittels hier nicht gezeigter Stäbe an einem Gestell 9 aufgehängt. Das Gehäuse 10 weist eine Abdeckung 26 auf, unter der sich eine Schwungmasse befindet, welche jedoch nicht im Innenraum des Gehäuses angeordnet ist. Der Innenraum des Gehäuses 10 dient zur Aufnahme der Siebe bzw. eines Siebstapels zur Fraktionierung und Abführung des zugeführten Schüttguts.

In Figur 4 ist eine Vorderansicht der Vorrichtung 1 gemäss Figur 1 dargestellt senkrecht zur durch die Tür 8 gemäss Figur 1 definierten Ebene.

Das Gehäuse 10 mit der Tür 8 ist wie oben erläutert mittels Stäben 25 an dem Gestell 9 aufgehängt und weist einen Einlass 13 auf, durch den Schüttgut 2 in das Gehäuse 10 zur Fraktionierung gefördert wird.

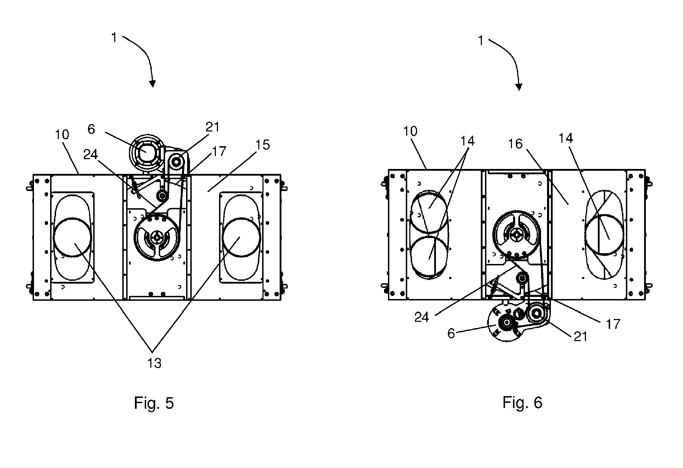

In Figur 5 ist in schematischer Darstellung ein Dach 15 der Vorrichtung 1 gemäss Figur 1 dargestellt.

Ein Gehäuse 10 der Vorrichtung 1 weist zwei Einlässe 13 zur Zuführung von Schüttgut in die Vorrichtung zur Fraktionierung auf. Die Vorrichtung 1 umfasst ein am Gehäuse 10 angebrachten Rotor 6, der mit einer Kopplungswelle 21 derart verbunden ist, dass diese in Rotation versetzbar ist. In einem Endbereich der Kopplungswelle 21 ist ein Riemen 24 angebracht, der mit einer auf dem Dach 15 angeordneten Schwungmasse 17 derart verbunden ist, dass diese in Rotation versetzbar ist. Die Schwungmasse 17 stellt eine Umwucht dar, wodurch bei Antreiben bzw. Rotation der Schwungmasse 17 das Gehäuse 10 in eine Rüttelbewegung versetzbar ist.

Die beiden Einlässe 13 weisen kreisförmige Öffnungen mit einem Durchmesser von 300 mm auf

In Figur 6 ist ein Boden 16 eines Gehäuses 10 der Vorrichtung 1 gemäss Figur 1 dargestellt.

Der Boden 16 weist drei Öffnungen 14 auf, wobei die beiden benachbarten Öffnungen 14 zum Abführen von Schrollen sowie Sand dienen und jeweils einen Durchmesser von 300mm aufweisen. Der weitere Auslass 14, der von den beiden Auslässen 14 durch eine Schwungmasse 17 beabstandet ist, dient der Abführung der Fraktion des Schüttguts, die weiterverarbeitet werden soll wie beispielsweise gereinigtes Getreide.

An dem Gehäuse 10 der Vorrichtung 1 ist eine Motor 6 angebracht, der mit einer Kopplungswelle 21 verbunden ist, sodass diese Kopplungswelle 21 in Rotation versetzbar ist. In einem Endbereich der Kopplungswelle 21 ist ein Riemen 24 angebracht. Der Riemen 24 ist mit einer Schwungmasse 17, die auf dem Boden 16 angebracht ist, verbunden. Dadurch ist die Schwungmasse 17, die eine Unwucht darstellt, antreibbar, wodurch die Schwungmasse 17 in Rotation versetzbar ist. Der Motor 6 ist der gleiche Motor wie in Figur 5 dargestellt, d.h. die Vorrichtung 1 weist lediglich einen Motor 6 als Antriebsmittel auf.

Die hier erläuterte Anordnung aus Motor 6, Kopplungsmittel 21, Riemen 24 und Schwungmasse 17 hat denselben Zweck wie zur Figur 5 erläutert.

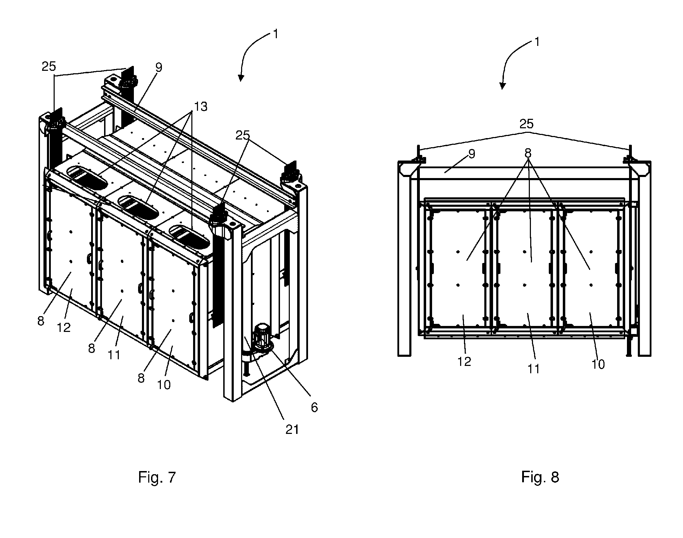

In Figur 7 ist eine alternative erfindungsgemässe Ausführungsform einer Vorrichtung 1 zum Fraktionieren von Schüttgut dargestellt. Die Vorrichtung weist ein Gehäuse 10, ein zweites Gehäuse 11 und ein drittes Gehäuse 12 auf zum parallelen Fraktionieren von Schüttgut. Das Gehäuse 10, das zweite Gehäuse 11 sowie das dritte Gehäuse 12 weisen je einen Einlass 13 auf zum fördern von Schüttgut in die Gehäuse zur Fraktionierung.

Die Gehäuse sind miteinander lösbar verbunden mittels nicht gezeigten Anklippmechanismen. Das erste Gehäuse 10 sowie das dritte Gehäuse 12 sind mittels Stäben 25 an einem Gestell 9 aufgehängt. Jedes der Gehäuse weist eine Tür 8 auf, über die der jeweilige Innenraum des jeweiligen Gehäuses zugänglich ist. In die jeweiligen Innenräume der jeweiligen Gehäuse sind Siebe bzw. Siebstapel aufnehmbar (hier nicht gezeigt) zur Fraktionierung des Schüttguts.

Die Vorrichtung 1 weist einen am Gehäuse 10 angebrachten Motor 6 auf, der mit einer Kopplungswelle 21 verbunden ist, sodass diese Kopplungswelle 21 in Rotation versetzbar ist. Mittels dieser Anordnung aus Motor 6 und Kopplungswelle 21 sowie mit nicht gezeigten Riemen und Schwungmassen auf Dach und Boden des Gehäuses 10, des zweiten Gehäuses 11 sowie des dritten Gehäuses 12 sind die Gehäuse in eine schwingende Bewegung versetzbar, analog zur Beschreibung der Funktionsweise zur Figur 1. Die Vorrichtung 1 mit drei Gehäusen weist demnach also lediglich einen Motor 6 und eine Kopplungswelle 21 zur Erzeugung der schwingenden Bewegung der drei Gehäuse auf.

In Figur 8 ist in einer Vorderansicht senkrecht zur durch die Türen 8 definierten Ebene der Vorrichtung 1 gemäss Figur 7 dargestellt.

Die Vorrichtung 1 weist ein Gehäuse 10, ein zweites Gehäuse 11 sowie ein drittes Gehäuse 12 auf, die jeweils eine Tür 8 umfassen. Diese drei Gehäuse sind mittels Stäben 25 an einem Gestell 9 aufgehängt, wobei lediglich das Gehäuse 10 sowie das dritte Gehäuse 12 mit den Stäben verbunden sind. Das Gehäuse 10 ist mit dem zweiten Gehäuse 11 lösbar mittels eines Klippmechanismus verbunden und das dritte Gehäuse 12 ist ebenso mit dem zweiten Gehäuse 11 lösbar mittels eines Klippmechanismus verbunden.

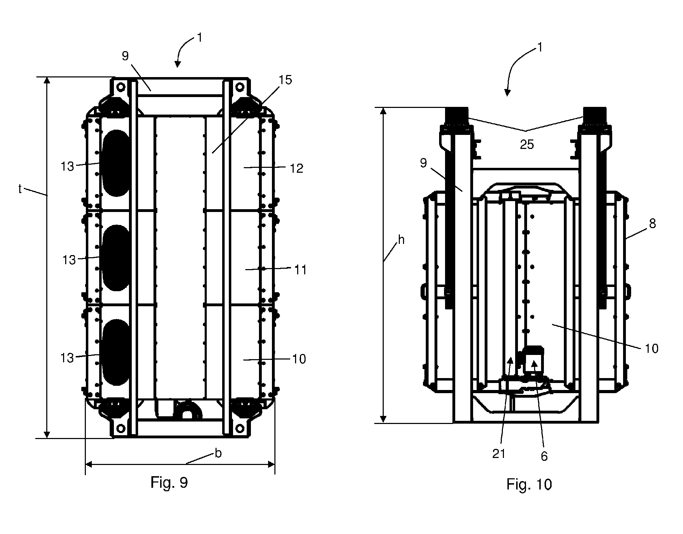

In Figur 9 ist eine Draufsicht senkrecht zur durch die Einlässe 13 definierten Ebene der Vorrichtung 1 gemäss Figur 7 dargestellt.

Die Vorrichtung 1 umfasst ein Gehäuse 10, ein zweites Gehäuse 11 sowie ein drittes Gehäuse 12 mit jeweils einem Einlass 13 auf dem Dach 15 der Gehäuse. Diese drei Gehäuse sind wie vorgängig beschrieben an einem Gestell 9 aufgehängt. Die Vorrichtung 1 weist eine Breite b von 2 m auf und eine Tiefe t von 3.8 m.

In Figur 10 ist eine Seitenansicht parallel zur durch die Türen 8 gemäss Figur 7 definierten Ebene der Vorrichtung 1 dargestellt.

In der hier vorliegenden Darstellung ist das Gehäuse 10 der Vorrichtung 1 sichtbar, welches mittels der Stäbe 25 an dem Gestell 9 aufgehängt ist. An dem Gehäuse 10, welches eine Tür 8 aufweist, ist ein Motor 6 sowie eine Kopplungswelle 21 angebracht zur Versetzung des Gehäuses 10 in eine schwingende Bewegung zur Fraktionierung von Schüttgut.

Die Vorrichtung 1 weist eine Höhe h von 3.1 m auf.

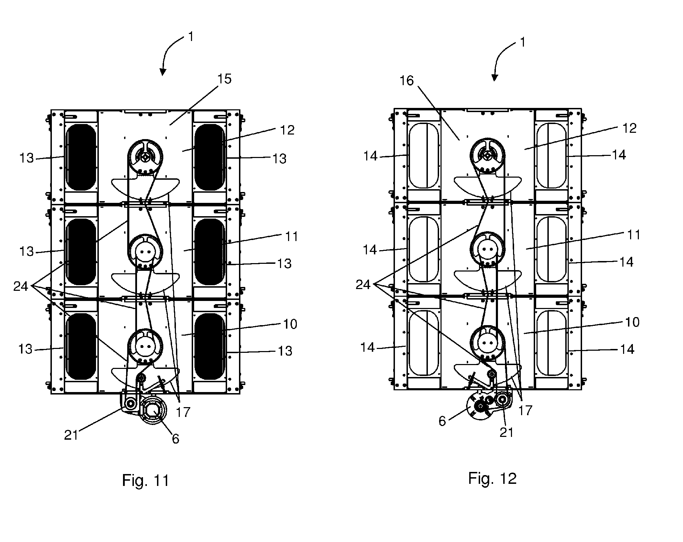

In Figur 11 ist ein Dach 15 in schematischer Darstellung der Vorrichtung 1 gemäss Figur 7 dargestellt. Im Unterschied zur Figur 7 weist jedoch die Vorrichtung 1 sechs Einlässe 13 auf, d.h. das Gehäuse 10, das zweite Gehäuse 11 sowie das dritte Gehäuse 12 weisen jeweils zwei Einlässe 13 auf.

An dem Gehäuse 10 ist ein Motor 6 sowie eine Kopplungswelle 21 angebracht, wobei Motor 6 und Kopplungswelle 21 so miteinander verbunden sind, dass die Kopplungswelle 21 in Rotation versetzbar ist. Auf dem Dach 15 der Gehäuse sind Schwungmassen 17 angeordnet, wobei jedes der Gehäuse auf dem Dach 15 jeweils eine Schwungmasse 17 aufweist.

Die Schwungmasse 17 des Gehäuses 10 ist mittels eines Riemens 24 mit der Kopplungswelle 21 verbunden. Die Schwungmasse 17 auf dem Dach 15 des zweiten Gehäuses 11 ist mittels eines weiteren Riemens 24 mit der ersten Schwungmasse 17 verbunden und die Schwungmasse 17 des dritten Gehäuses 12 ist mittels eines weiteren Riemens 24 mit der Schwungmasse 17 auf dem Dach 15 des zweiten Gehäuses 11 verbunden. Somit sind alle drei Schwungmassen 17 auf dem Dach 15 der Gehäuse mittels der einen Kopplungswelle 21 antreibbar. Wird die Kopplungswelle 21 durch den Motor 6 in Rotation versetzt, so wird die Schwungmasse 17 auf dem Gehäuse 10 mittels des Riemens 24 angetrieben und in eine Rotation versetzt. Durch den weiteren Riemen 24 zwischen den Schwungmassen 17 auf dem Gehäuse 10 und dem zweiten Gehäuse 11 erfolgt somit auch ein Antreiben der zweiten Schwungmasse 17 auf dem zweiten Gehäuse 11, die dadurch ebenfalls in Rotation versetzt wird. Nach dem gleichen Prinzip wird nun auch die dritte Schwungmasse 17 auf dem dritten Gehäuse 12 in Rotation versetzt.

In Figur 12 ist ein Boden 16 der in Figur 11 beschriebenen Vorrichtung 1 dargestellt. Diese Vorrichtung 1 weist ein Gehäuse 10, ein zweites Gehäuse 11 sowie ein drittes Gehäuse 12 auf, wobei jedes der Gehäuse zwei Auslässe 14 aufweist.

Analog zur Beschreibung gemäss Figur 11 weist die Vorrichtung den Motor 6 und die Kopplungswelle 21 auf, die am Gehäuse 10 angebracht sind, wobei die Kopplungswelle 21 mit der Schwungmasse 17 des Gehäuses 10 mittels eines Riemens 24 verbunden ist. Die Schwungmasse 17 des Gehäuses 10 ist mit einem weiteren Riemen 24 mit der Schwungmasse 17 des zweiten Gehäuses 11 verbunden und die Schwungmasse 17 des dritten Gehäuses 12 ist mit einem weiteren Riemen 24 mit der Schwungmasse 17 des zweiten Gehäuses 11 verbunden.

Die Vorrichtung 1 weist somit drei Schwungmassen 17 auf dem Boden 16 der Vorrichtung 1 auf und drei weitere nicht gezeigte Schwungmassen auf dem Dach der Vorrichtung 1. Durch Antreiben dieser Schwungmassen mittels Motor 6 über die Kopplungswelle 21 erfolgt das Versetzen der Gehäuse in eine schwingende Bewegung wie bereits zu Figur 11 erläutert.

## Patentansprüche

1. Verfahren zur Fraktionierung von Schüttgut (2), **gekennzeichnet durch** die folgenden Schritte:
- Zuführen des Schüttguts (2) auf zumindest ein Sieb einer Vorrichtung (1) zur Fraktionierung, wobei die Vorrichtung (1) zumindest ein Gehäuse (10) mit einem Innenraum (18) zur Aufnahme des zumindest einen Siebs, insbesondere zumindest eines Siebstapels, umfasst, wobei das Gehäuse (10) zumindest einen Einlass (13) zur Zuführung des Schüttguts (2) und zumindest einen Auslass (14) zur Abführung von zumindest einer Fraktion des Schüttguts (2) aufweist, wobei das Gehäuse (10) bei bestimmungsgemässem Gebrauch ein Dach (15) und einen Boden (16) aufweist, wobei auf oder in dem Dach (15) und auf oder in dem Boden (16) zumindest jeweils eine Schwungmasse (17) angeordnet ist, wobei die Vorrichtung (1) zumindest ein ausserhalb des Innenraums (18) angeordnetes mechanisches Kopplungsmittel aufweist, wobei die Schwungmassen (17) mittels des mechanischen Kopplungsmittels miteinander gekoppelt und antreibbar sind, und wobei die Vorrichtung (1) ein Antriebsmittel zum Antreiben des mechanischen Kopplungsmittels aufweist; und
- Versetzen des zumindest einen Gehäuses (10) in eine schwingende Bewegung mittels Antreiben der Schwungmassen (17); und
- Fraktionieren des Schüttguts (2) mittels des Siebes in zumindest eine erste Fraktion und eine zweite Fraktion; und
- Abführen zumindest einer der Fraktionen des Schüttguts (2) **durch** den Auslass (14) aus dem Gehäuse (10).

2. Verfahren nach Anspruch 1, **dadurch gekennzeichnet, dass** das Schüttgut (2) in zumindest zwei Fraktionen, bevorzugt in drei Fraktionen, besonders bevorzugt in vier Fraktionen und ganz besonders bevorzugt in zumindest fünf Fraktionen fraktioniert wird.

3. Verfahren nach einem der Ansprüche 1 oder 2, **dadurch gekennzeichnet, dass** dem Gehäuse (10) Schüttgut (2) mit einer Förderrate von zumindest 50 t/h, bevorzugt von zumindest 75 t/h und besonders bevorzugt von zumindest 100 t/h zugeführt und fraktioniert wird.

4. Verfahren nach einem der Ansprüche 1 bis 3, **dadurch gekennzeichnet, dass** zwei Gehäuse, bevorzugt drei Gehäuse und ganz besonders bevorzugt zumindest vier Gehäuse mittels des mechanischen Kopplungsmittels und des Antriebsmittels in eine schwingende Bewegung versetzt werden.

5. Verfahren nach einem der Ansprüche 1 bis 4, **dadurch gekennzeichnet, dass** das mechanische Kopplungsmittel eine rotierbare Kopplungswelle (21) umfasst, die, insbesondere in den Endbereichen der rotierbaren Kopplungswelle (21), mittels Riemen (24) mit den an Dach (15) und Boden (16) des Gehäuses (10) angeordneten Schwungmassen (17) verbunden ist, wobei das Antriebsmittel die rotierbare Kopplungswelle (21) in Rotation versetzt und mittels der Riemen (24) die Schwungmassen (17) angetrieben werden.

6. Verfahren nach einem der Ansprüche 1 bis 5, **dadurch gekennzeichnet, dass** das Gehäuse (10)aufgehängt ist und bei bestimmungsgemässem Gebrauch in eine im Wesentlichen zur Wirkung der Schwerkraft senkrechte Schwingungsbewegung und / oder Kreisbewegung versetzt wird.

7. Verfahren nach einem der Ansprüche 1 bis 6, **dadurch gekennzeichnet, dass** ein Siebabstoss beim Fraktionieren, insbesondere die ersten Fraktion (3), in der Ebene einer Siebfläche des Siebes in zumindest zwei voneinander getrennten, sich insbesondere gegenüberliegenden Randabschnitten des Siebes erfolgt.

8. Vorrichtung (1) zur Fraktionierung von Schüttgut (2), insbesondere zur Durchführung eines Verfahrens gemäss einem der Ansprüche 1 bis 7, umfassend zumindest ein Gehäuse (10) mit einem Innenraum (18) zur Aufnahme zumindest eines Siebes, insbesondere zumindest eines Siebstapels, zur Fraktionierung des Schüttguts (2) in zumindest eine erste Fraktion und eine zweite Fraktion, wobei das Gehäuse (10) zumindest einen Einlass (13) zur Zuführung des Schüttguts (2) auf das Sieb und zumindest einen Auslass (14) zur Abführung von zumindest einer Fraktion des Schüttguts (2) aufweist, wobei das Gehäuse (10) bei bestimmungsgemässem Gebrauch ein Dach (15) und einen Boden (16) aufweist, **dadurch gekennzeichnet, dass** auf oder in dem Dach (15) und auf oder in dem Boden (16) zumindest jeweils eine Schwungmasse (17) angeordnet ist, wobei die Vorrichtung (1) zumindest ein ausserhalb des Innenraums (18) angeordnetes mechanisches Kopplungsmittel aufweist, wobei die Schwungmassen (17) mittels des zumindest einen mechanischen Kopplungsmittels miteinander gekoppelt und antreibbar sind, und wobei die Vorrichtung (1) ein Antriebsmittel zum Antreiben des zumindest einen mechanischen Kopplungsmittels aufweist, derart, dass das zumindest eine Gehäuse (10) mittels der Schwungmassen (17) in eine schwingende Bewegung versetzbar ist.

9. Vorrichtung (1) nach Anspruch 8, **dadurch gekennzeichnet, dass** das Gehäuse (10) aufgehängt ist.

10. Vorrichtung (1) nach Anspruch 8 oder 9, **dadurch gekennzeichnet, dass** das zumindest eine mechanische Kopplungsmittel eine rotierbare Kopplungswelle (21) mit, insbesondere in den Endbereichen der Kopplungswelle (21) angeordneten, Riemen (24) ist, wobei jede Schwungmasse (17) mit zumindest einem Riemen (24) verbunden ist, und wobei die rotierbare Kopplungswelle (21) mittels des Antriebsmittels in Rotation versetzbar ist zum Antreiben der Schwungmassen (17).

11. Vorrichtung (1) nach einem der Ansprüche 8 bis 10, **dadurch gekennzeichnet, dass** die Vorrichtung (1) zumindest zwei Gehäuse, bevorzugt drei Gehäuse und ganz besonders bevorzugt zumindest vier Gehäuse aufweist zur parallelen Fraktionierung von Schüttgut (2).

12. Vorrichtung (1) nach Anspruch 11, **dadurch gekennzeichnet, dass** die Vorrichtung (1) genau eine rotierbare Kopplungswelle (21) aufweist mit zumindest zwei an der Kopplungswelle (21) angeordneten Riemen (24), wobei die zumindest zwei Riemen (24) mit den auf oder in dem Dach (15) und auf oder in dem Boden (16) jeweils angeordneten Schwungmassen (17) des Gehäuses (10) verbunden sind, und wobei das Gehäuse (10) und das zumindest zweite Gehäuse (11) mittels weiterer Riemen (24) verbunden sind zum Antreiben der auf dem Dach (15) und dem Boden (16) jeweils angeordneten Schwungmasse (17) des zweiten Gehäuses (11).

13. Rotierbare Kopplungswelle (21) für eine Vorrichtung (1) gemäss einem der Ansprüche 8 bis 12, insbesondere zur Durchführung eines Verfahrens gemäss einem der Ansprüche 1 bis 7, **dadurch gekennzeichnet, dass** die rotierbare Kopplungswelle (21) verbindbar ist mit einem Antriebsmittel der Vorrichtung (1) zum Antreiben der rotierbaren Kopplungswelle (21) und dass an der rotierbaren Kopplungswelle (21), insbesondere in den Endbereichen, ein Verbindungsmittel, insbesondere ein Riemen (24), montierbar ist zur Verbindung mit jeweils zumindest einer auf oder in dem Dach (15) und auf oder in dem Boden (16) eines Gehäuses (10) der Vorrichtung (1) angeordneten Schwungmasse (17), derart, dass das Gehäuse (10) mittels der Schwungmassen (17) in eine schwingende Bewegung versetzbar ist.

14. System (7) bestehend aus einer Kopplungswelle (21), zumindest zwei Riemen (24) und insbesondere einem Antriebsmittel zum Antreiben der Kopplungswelle (21), zur Verbindung mit einer Vorrichtung (1) zur Fraktionierung zur Herstellung einer Vorrichtung gemäss einem der Ansprüche 8 bis 12, insbesondere zur Durchführung eines Verfahrens gemäss einem der Ansprüche 1 bis 7, **dadurch gekennzeichnet, dass** das System (7) mit einem Gehäuse (10) der Vorrichtung (1) verbindbar ist, wobei das Gehäuse (10) jeweils zumindest eine auf einem Dach (15) und einem Boden (16) des Gehäuses (10) angeordnete Schwungmasse (17) aufweist, wobei jeweils einer der zumindest zwei Riemen (24) an der rotierbaren Kopplungswelle (21), insbesondere in jeweils einem Endbereich, montierbar ist und mit jeweils einer der Schwungmassen (17) verbindbar ist, derart, dass durch Antreiben der Kopplungswelle (21) das Gehäuse (10) mittels der Schwungmassen (17) in eine schwingende Bewegung versetzbar ist.

15. Verfahren zum Umrüsten und / oder Aufrüsten einer Vorrichtung (1) zur Fraktionierung von Schüttgut (2), **gekennzeichnet durch** den Schritt des Verbindens einer rotierbaren Kopplungswelle (21) gemäss Anspruch 13 mit der Vorrichtung (1) umfassend ein Gehäuse (10) und ein Antriebsmittel oder des Verbindens eines Systems gemäss Anspruch 14 mit einem Gehäuse (10) der Vorrichtung (1) zur Herstellung einer Vorrichtung (1) gemäss einem der Ansprüche 8 bis 12.
